# EUROPÄISCHE PATENTSCHRIFT

(11) **EP 1 829 669 B1**
(45) Veröffentlichungstag und Bekanntmachung des Hinweises auf die Patenterteilung: **15.07.2015**
(21) Anmeldenummer: 07003525.8
(22) Anmeldetag: 21.02.2007
(51) Int. Cl.: B29C 70/52, E05D 1/02, B60R 13/01, B60R 13/02

(54) **Verfahren zur Herstellung einer Baueinheit aus mittels eines Filmscharniers miteinander verbundener Profilformteile und durch die Verfahren hergestellte Baueinheit**
Methods for producing an assembly made of moulding parts connected to each other via a film hinge and assembly produced by the methods
Procédés de fabrication d'une unité de construction à l'aide de pièces de formage profilées reliées par une charnière à film et unité de construction fabriquée par les procédés

(30) Priorität: 01.03.2006 DE 102006009344
(43) Veröffentlichungstag der Anmeldung: 05.09.2007
(73) Patentinhaber: MAN Truck & Bus AG, 80995 München (DE)
(72) Erfinder: Schönherr, Stefan, 38102 Braunschweig (DE); Stamm, Christian, 29221 Celle (DE); Lesnik, Jacek, 38228 Salzgitter (DE)

(56) Entgegenhaltungen:
- EP-A1- 0 367 625
- DE-U1- 20 120 819
- US-A1- 2002 038 684

## Beschreibung

### Stand der Technik

Die Erfindung betrifft ein Verfahren zur Herstellung einer Baueinheit, beinhaltend wenigstens zwei aus faserverstärktem Kunststoff bestehende Profilformteile, welche mittels wenigstens eines mindestens teilweise aus elastischem Kunststoff bestehenden Filmscharniers miteinander gelenkig verbunden sind, gemäß dem Oberbegriff von Anspruch 1 und Anspruch 2.

Solche Profilformteile können beispielsweise als Verkleidungsteile für den Außenbereich wie den Innenbereich eines Kraftfahrzeugs, insbesondere bei Nutzfahrzeugen eingesetzt werden, wobei zur Ausbildung von Klappen das eine Fahrzeugverkleidungsteil gegenüber dem anderen Fahrzeugverkleidungsteil ausklappbar ausgebildet ist. Eine solche Anwendung ist beispielsweise bei Kofferraumklappen im Außenbereich von Reisebussen gegeben, bei welchen eine Kofferraumklappe aus Kunststoff an einer ebenfalls aus Kunststoff bestehenden Bordwand mittels eines Scharniers ausklappbar gehalten ist. Die Anwendung solcher Profilformteile als Verkleidungsteile ist jedoch nicht auf Fahrzeuge beschränkt, vielmehr können solche auch in beliebigen anderen Anwendungen wie beispielsweise als Innen- oder Außenverkleidungsteile von Aggregaten, als Möbelteile, zur Verkleidung von Räumen in Gebäuden oder von Innenräumen von Flugzeugen oder für beliebige andere Anwendungen verwendet werden.

Ein gattungsgemäßes Verfahren ist aus der DE 201 20 819 U1 bekannt. In dieser Schrift wird ein Abdeckteil mit mittels einer Klappe abdeckbaren Öffnung offenbart, wobei die Klappe mittels eines Scharniers an dem Abdeckteil entlang einer Schwenkachse aufklappbar angebracht ist. Dabei wird das Scharnier als Flächengebilde wie Gewebe, Gewirke, Gelege aus Kunststoff beidseitig sowohl in das Abdeckteil als auch in die Klappe im Rahmen eines Pressformverfahrens eingepresst.

Die US-A-2002038684 offenbart ein Verfahren zur Herstellung einer Baueinheit, beinhaltend wenigstens zwei aus Kunststoff bestehende Profilformteile, welche mittels eines aus elastischem Kunststoff bestehenden Filmscharniers miteinander gelenkig verbunden sind. Die Verbindung zwischen den Profilformteilen und dem Filmscharnier wird nach einem Coextrusionsverfahren hergestellt.

Der vorliegenden Erfindung liegt die Aufgabe zugrunde, ein alternatives Verfahren zu dem eingangs erwähnten Herstellverfahren anzugeben.

Erfindungsgemäß wird diese Aufgabe durch die Merkmale von Anspruch 1 und Anspruch 2 gelöst.

### Vorteile der Erfindung

Im Rahmen eines Pultrusionsverfahrens wird im allgemeinen eine harzgetränkte Fasermatte durch ein Pultrusionswerkzeug geführt und unter Einwirkung von Druck ein gewünschtes Profil erzeugt, welches nach dem Aushärten des Harzes formstabil bleibt.

Ein solches, an sich bekanntes Pultrusionsverfahren wird gemäß der Erfindung zur Herstellung der eingangs beschriebenen Bauheit dahingehend modifiziert, dass die wenigstens zwei Profilformteile sowie deren Verbindung mittels des Filmscharniers in einem einzigen Arbeitsgang pultrudiert werden. Dies bringt signifikante Vorteile hinsichtlich Fertigungszeit und Fertigungskosten mit sich.

Im Rahmen des Pultrusionsverfahrens, wie es bei Erfindung verwendet wird, werden beispielsweise zunächst zwei Fasermatten oder Fasergewebe, welche später die beiden Fahrzeugverkleidungsteile bilden, durch ein Harzbad gezogen und dadurch mit Harz, insbesondere mit einem Phenolharz getränkt. Die Fasergewebe oder Fasermatten beinhalten bevorzugt Glasfasern und/oder Kohlenstofffasern und/oder Aramidfasern.

Anschließend werden beispielsweise die beiden harzimprägnierten Fasermatten zusammen und parallel mit dem ihnen zwischengeordneten vorgefertigten Filmscharnier in ein Pultrusionswerkzeug ein- und durch dieses hindurchgeführt, wobei im Inneren des Pultrusionswerkzeugs Wärme zugeführt wird.

Alternativ entsteht das Filmscharnier erst während des Pultrusionsverfahrens, indem die wenigstens zwei harzimprägnierten Fasergewebe oder Fasermatten eine Lücke zwischen sich bildend parallel in ein Pultrusionswerkzeug eingeführt und ein pastöser Thermoplast innerhalb des Pultrusionswerkzeugs in die Lücke zwischen ihnen extrudiert und anschließend zusammen und parallel mit diesen durch das Pultrusionswerkzeug hindurchgeführt wird, um nach Aushärtung und Abkühlung die beiden durch ein Filmscharnier miteinander verbundenen Profilformteile auszubilden.

Das Pultrusionswerkzeug prägt den harzimprägnierten Fasermatten einerseits das gewünschte Profil auf, welches die Fahrzeugverkleidungsteile aufweisen sollen. Wenn andererseits das Filmscharnier und die harzimprägnierten Fasergewebe oder harzimprägnierten Fasermatten während des parallelen Durchführens durch das Pultrusionswerkzeug randseitig überlappend miteinander verbunden werden, entstehen nach dem Aushärten des Harzes gleichzeitig formschlüssige Verbindungen zwischen den Profilformteilen und dem Filmscharnier. Denn nach dem Aushärten des Harzes bilden sich aus den Fasermatten oder Fasergewebe vernetzte Duroplaste mit hoher Steifigkeit und Festigkeit aus.

Zur Ausbildung einer besonders festen formschlüssigen Verbindung trägt bei, wenn in einer Richtung quer zu einer Scharnierachse gesehen die Seitenränder des Filmscharniers wenigstens stellenweise einen hinterschnittenen Querschnitt aufweisen.

Wenn für das Filmscharnier ein Elastomer verwendet wird, so trägt diese Maßnahme zur Schwingungsentkopplung der beiden durch das Filmscharnier verbundenen Fahrzeugverkleidungsteile bei. Dies ist besonders bei Kraftfahrzeugen von Vorteil, bei welchen immer die Gefahr besteht, dass Verkleidungsteile durch fahrzeuginterne Ursachen wie beispielsweise den Antrieb oder durch Fahrbahnunebenheiten in Schwingungen versetzt werden und dadurch auch unerwünschten Luftschall erzeugen.

Wenn die Baueinheit in einem sichtbaren Bereich verbaut wird, sei es im Innenraum oder im Außenbereich eines Fahrzeugs, ist aus optischen Gründen günstig, wenn das Filmscharnier und die harzimprägnierten Fasergewebe oder die harzimprägnierten Fasermatten derart ausgeführt sind, dass sie nach dem Pultrusionsverfahren die gleiche Farbe aufweisen.

### Zeichnungen

Nachstehend sind Ausführungsbeispiele der Erfindung in der Zeichnung dargestellt und in der nachfolgenden Beschreibung näher erläutert. In der Zeichnungen zeigt :
- Fig.1: eine schematische Darstellung eines Verfahrens gemäß einer bevorzugten Ausführungsform der Erfindung zur Herstellung einer Baueinheit bestehend aus zwei Fahrzeugverkleidungsteilen, welche durch ein Filmscharnier miteinander verbunden sind,
- Fig.2: eine schematische Darstellung des Herstellverfahrens gemäß einer weiteren Ausführungsform,
- Fig.3: eine Schnittdarstellung einer gemäß dem Verfahren nach der Erfindung hergestellten Baueinheit entlang der Linie III-III von Fig.1 und Fig.2.

### Beschreibung der Ausführungsbeispiele

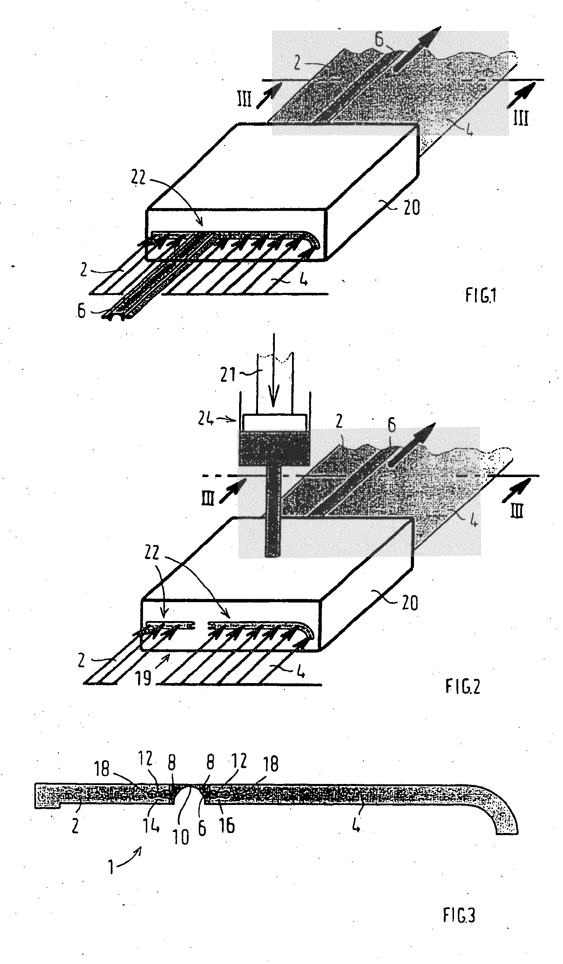

In Fig.3 ist eine Baueinheit 1 im Schnitt gezeigt, bestehend vorzugsweise aus zwei Fahrzeugverkleidungsteilen 2, 4 als Profilformteile, welche durch ein Filmscharnier 6 miteinander verbunden sind. Dabei kann es sich um beliebige äußere oder innere Fahrzeugverkleidungsteile handeln, wobei der Begriff Fahrzeugverkleidungsteil weit gefasst ist und jegliche Art von Verkleidungsteil oder Umhüllung umfasst, beispielsweise auch Gehäuse von Aggregaten. Im vorliegenden Fall wird die Erfindung anhand einer äußeren Seitenwand 2 eines Reisebusses erläutert, an welcher eine Kofferraumklappe 4 mittels des Filmscharniers 6 ausklappbar befestigt ist.

Die Seitenwand 2 und die Kofferraumklappe 4 bestehen jeweils vorzugsweise aus einem vernetzten Duroplasten, welcher auf der Basis eines faserverstärkten Kunststoffs hergestellt ist. Das Filmscharnier 6 besteht aus einem elastischen Kunststoff, vorzugsweise aus einem elastischen Thermoplasten oder einem Elastomer und weist vorzugsweise zwei symmetrische Wangen 8 auf, welche durch einen demgegenüber dünnen Mittelsteg 10 miteinander verbunden sind. Die Wangen 8 haben jeweils eine sich nach außen weg erstreckende Eingriffsleiste 12, die entlang ihrer Längserstreckung durchgehend oder auch unterbrochen ausgebildet sein kann.

Diese Eingriffsleisten 12 sind innerhalb der Ränder 14, 16 der Seitenwand 2 und der Kofferraumklappe 4 formschlüssig aufgenommen, beispielsweise dadurch, dass die Wandstärke der Eingriffsleisten 12 in Richtung ihrer äußerer Enden 18 ansteigt. Dies kann dadurch realisiert sein, dass die Eingriffsleisten 12 mit abgerundeten, im Querschnitt etwa kreisförmigen Enden 18 versehen sind, welche einen gegenüber der restlichen Wandstärke der Eingriffsleisten 12 größeren Durchmesser aufweisen, so dass sich in einer Richtung quer zur Längserstreckung des Filmscharniers 6 gesehen ein hinterschnittener Querschnitt ausbildet.

Zur Herstellung der Bauheit 1 wird ein Pultrusionsverfahren verwendet, bei welchem die Seitenwand 2 und die Kofferraumklappe 4 sowie deren Verbindung mittels des Filmscharniers 6 in einem einzigen Arbeitsgang pultrudiert werden.

Im Rahmen des Pultrusionsverfahrens, wie es bei Erfindung bevorzugt verwendet wird, werden zunächst zwei Fasermatten oder Fasergewebe, welche später die beiden Fahrzeugverkleidungsteile 2, 4 bilden, durch ein Harzbad gezogen und dadurch mit Harz, insbesondere mit einem Phenolharz getränkt. Die Fasermatten 2, 4 beinhalten bevorzugt Glasfasern und/oder Kohlenstofffasern und/oder Aramidfasern.

Für das Filmscharnier 6 wird generell ein elastischer Kunststoff mit hoher Biegedauerfestigkeit verwendet, vorzugsweise Elastomere oder elastische Thermoplaste.

Die beiden harzimprägnierten, aber noch formbaren Fasermatten 2, 4 werden dann zusammen und parallel mit dem ihnen zwischengeordneten, bereits zuvor gefertigten Filmscharnier 6 in ein Pultrusionswerkzeug 20 ein- und durch dieses hindurchgeführt. Dieser Vorgang ist in Fig.1 gezeigt, wobei die Seitenwand 2 und die Kofferraumklappe 4 an einer Eintrittsöffnung 22 des Pultrusionswerkzeugs 20 als durch Pfeile symbolisierte Flächen dargestellt sind.

Das Pultrusionswerkzeug 20 beinhaltet in seinem Inneren eine in den Figuren verdeckte Negativform für die Fahrzeugverkleidungsteile 2, 4. Durch Ziehen entlang dieser Negativform passen sich die noch formbaren harzgetränkten Fasermatten 2, 4 an. Die Kontur der Negativform ist im vorliegenden Fall bereits an der Eintrittsöffnung 22 erkennbar, welche an dem der Kofferraumklappe 4 zugeordneten Abschnitt endseitig einen gekrümmten Verlauf hat, um einen ebenso gekrümmten Auslauf an die Kofferraumklappe 4 anzuformen.

Das Pultrusionswerkzeug 20 umfasst eine Heizeinrichtung, die Wärme auf die harzgetränkten Fasermatten 2, 4 überträgt, so dass das in den Fasermatten 2,4 aufgenommene Harz aushärtet und einen Faserverbundkunststoff mit einer phenolharzbasieren Matrix ausbildet, welche durch die Fasern der Fasermatten 2, 4 bewehrt ist. Die Pultrusionstemperatur beträgt etwa 110 °C bis 130 °C. Die Aufgaben des Matrixwerkstoffs sind die Übertragung und Verteilung der auftretenden Kräfte, die Fixierung der Fasern und deren Abschirmung gegen aggressive Umgebungsmedien, was vor allem bei korrosionsempfindlichen Kohlenstofffasern eine Rolle spielt. Nach dem Aushärten des Harzes bilden sich aus den Fasermatten demzufolge vernetzte Duroplaste 2, 4 mit hoher Steifigkeit und Festigkeit aus.

Alternativ (Fig. 2) entsteht das Filmscharnier 6 erst während des Pultrusionsverfahrens, indem die zwei harzimprägnierten Fasermatten 2, 4 eine Lücke 19 zwischen sich bildend parallel in beispielsweise getrennte Eintrittsöffnungen 22 des Pultrusionswerkzeugs 20 eingeführt und ein pastöser Thermoplast 21 innerhalb des Pultrusionswerkzeugs 20 in die Lücke 19 zwischen ihnen extrudiert und anschließend zusammen und parallel mit diesen durch das Pultrusionswerkzeug 20 hindurchgeführt wird. Dadurch wird die Lücke 19 zwischen den beiden Fasermatten 2, 4 mit dem noch flüssigen, pastösen oder weichen Thermoplasten ausgefüllt. Die Zuführung des extrudierten Thermoplasten erfolgt daher im Laufe der Pultrusionsstrecke innerhalb des Pultrusionswerkzeugs 20.

Im Rahmen der Extrusion wird in bekannter Weise ein Kunststoffgranulat 21 im thermoplastischen Zustand in einen mit dem Pultrusionswerkzeug 20 zusammenwirkenden Extruder 24 zwischen einer Schnecke und einem beheizten oder temperierten Zylinder gefördert, aufgeschmolzen, homogenisiert, entgast, verdichtet und durch ein Werkzeug, beispielsweise eine Düse geformt. Die aus dem Extruder 24 austretende und in die Lücke 19 im Inneren des Pultrusionswerkzeugs 20 extrudierte Schmelze ist pastös, weich oder flüssig und verfestigt sich während des Durchlaufs durch des Pultrusionswerkzeug 20 beispielsweise durch lokale Kühlung im Bereich der Lücke 19 zu dem Filmscharnier 6 unter Ausbildung eines Stoffund/oder Formschlusses mit den harzimprägnierten Fasermatten 2, 4, welche demgegenüber durch die im Rahmen des Pultrusionsverfahrens zugeführte Wärme aushärten.

Nach der Vereinigung des extrudierten Thermoplasten 6 mit den beiden Fasermatten 2,4 im Inneren des Pultrusionswerkzeugs 20 tritt der Strang als Baueinheit 1 durch eine in den Figuren nicht sichtbare Austrittsöffnung an der hinteren Stirnfläche aus dem Pultrusionswerkzeug 20 in Richtung des Pfeils heraus.

Das Pultrusionswerkzeug 20 prägt somit den harzimprägnierten Fasermatten 2, 4 einerseits die gewünschten Profile auf, welche die hieraus entstehenden Fahrzeugverkleidungsteile aufweisen sollen. Andererseits soll es die Verbindungen zwischen den Fahrzeugverkleidungsteilen 2, 4 und dem Filmscharnier 6 herstellen. Dazu müssen das Filmscharnier 6 und die harzimprägnierten Fasermatten 2.4 in randseitige Überlappung gebracht werden.

Dies kann gemäß der Ausführungsform von Fig.1 bereits vor dem Einführen in die Eintrittsöffnung 22 des Pultrusionswerkzeugs 20 etwa durch geeignete Führungen bewerkstelligt werden, wobei die Negativform im Inneren des Pultrusionswerkzeugs 20 die Überlappung fixiert. Dabei müssen die beiden Fasermatten 2, 4 und das Filmscharnier 6 so geführt werden, dass die Eingriffsleisten 12 des Filmscharniers 6 stirnflächig in die Ränder 14, 16 der beiden noch formbaren Fasermatten 2, 4 eindringen können, damit sich der in Fig.3 gezeigte Formschluss ausbilden kann, der nach dem Aushärten des Harzes schließlich stabilisiert wird. Zur Ausbildung einer besonders festen formschlüssigen Verbindung trägt bei, wenn die Eingriffsleisten 12 des Filmscharniers 6 wenigstens stellenweise einen hinterschnittenen, beispielsweise in Fig.3 gezeigten Querschnitt aufweisen, den die Ränder 14, 16 der Fasermatten 2, 4 dann umschließen.

Da die Baueinheit 1 in einem sichtbaren Bereich verbaut wird, ist es aus optischen Gründen günstig, wenn das Filmscharnier 6 und die harzimprägnierten Fasermatten 2, 4 derart ausgeführt sind, dass sie nach dem Pultrusionsverfahren die gleiche Farbe aufweisen. Dies kann beispielsweise dadurch erfolgen, dass dem Phenolharz Farbpigmente beigemischt werden, was auch bei der Herstellung des bereits gefertigten Filmscharniers 6 der Fall sein kann. Andererseits kann die durch das Filmscharnier 6 entstehende Trennfuge zwischen den Fahrzeugverkleidungsteilen auch einen Farbwechsel erleichtern. Je nach Anforderung sind beliebige Farbkombinationen möglich.

Nicht zuletzt kann das Filmscharnier 6 auch als verstecktes Scharnier ausgebildet sein und überlackiert werden, so dass es nicht sichtbar ist. Diese Vorgehensweise eignet sich allerdings nur für Fahrzeugverkleidungsteile, die nur in seltenen Fällen, z.B. im Notfall geöffnet werden müssen, weil dann die Lackierung im Bereich des Filmscharniers 6 aufgebrochen wird.

## Patentansprüche

1. Verfahren zur Herstellung einer Baueinheit (1), beinhaltend wenigstens zwei aus faserverstärktem Kunststoff bestehende Profilformteile (2, 4), welche mittels wenigstens eines mindestens teilweise aus elastischem Kunststoff bestehenden Filmscharniers (6) miteinander gelenkig verbunden sind, wobei die wenigstens zwei Profilformteile (2, 4) sowie deren Verbindung mittels des Filmscharniers (6) durch das Verfahren in einem Arbeitsgang hergestellt werden, **dadurch gekennzeichnet, dass** das Verfahren ein Pultrusionsverfahren ist und dass wenigstens zwei harzimprägnierte Fasergewebe oder Fasermatten (2, 4) zusammen und parallel mit dem ihnen zwischengeordneten vorgefertigten Filmscharnier (6) in ein Pultrusionswerkzeug (20) ein- und durch dieses hindurchgeführt werden.

2. Verfahren zur Herstellung einer Baueinheit (1), beinhaltend wenigstens zwei aus faserverstärktem Kunststoff bestehende Profilformteile (2, 4), welche mittels wenigstens eines mindestens teilweise aus elastischem Kunststoff bestehenden Filmscharniers (6) miteinander gelenkig verbunden sind, wobei die wenigstens zwei Profilformteile (2, 4) sowie deren Verbindung mittels des Filmscharniers (6) durch das Verfahren in einem Arbeitsgang hergestellt werden, **dadurch gekennzeichnet, dass** das Verfahren ein Pultrusionsverfahren ist und dass wenigstens zwei harzimprägnierte Fasergewebe oder Fasermatten (2, 4) eine Lücke (19) zwischen sich bildend parallel in ein Pultrusionswerkzeug (20) eingeführt und ein pastöser Thermoplast innerhalb des Pultrusionswerkzeugs (20) in die Lücke (19) extrudiert und anschließend zusammen und,parallel mit diesen durch das Pultrusionswerkzeug (20) hindurchgeführt wird, um nach Aushärtung und Abkühlung die beiden durch ein Filmscharnier (6) miteinander verbundenen Profilformteile (2, 4) auszubilden.

3. Verfahren nach Anspruch 1 oder 2, **dadurch gekennzeichnet, dass** das Filmscharnier (6) oder der pastöse Thermoplast einerseits und die harzimprägnierten Fasergewebe oder Fasermatten (2, 4) andererseits wenigstens während des parallelen Durchführens durch das Pultrusionswerkzeug (20) randseitig überlappend miteinander verbunden werden.

4. Verfahren nach wenigstens einem der Ansprüche 1 bis 3, **dadurch gekennzeichnet, dass** die harzimprägnierten Fasergewebe oder Fasermatten (2, 4) mit dem ihnen zwischengeordneten Filmscharnier (6) unter Einwirkung von Wärme geformt und ausgehärtet werden.

5. Verfahren nach Anspruch 4, **dadurch gekennzeichnet, dass** zur Ausbildung einer jeweils formschlüssigen Verbindung in einer Richtung quer zur Längserstreckung des Filmscharniers (6) gesehen die Ränder (12) des Filmscharniers (6) wenigstens stellenweise einen hinterschnittenen Querschnitt aufweisen, welcher vom Rand (14, 16) des zugeordneten Profilformteils (2, 4) umgriffen ist.

6. Verfahren nach wenigstens einem der vorhergehenden Ansprüche, **dadurch gekennzeichnet, dass** das Filmscharnier (6) wenigstens teilweise aus einem Thermoplasten und/oder einem Elastomer besteht.

7. Verfahren nach wenigstens einem der vorhergehenden Ansprüche, **dadurch gekennzeichnet, dass** durch das Pultrusionsverfahren aus den harzimprägnierten Fasergeweben oder Fasermatten (2, 4) faserverstärkte Kunststoffprofile gebildet werden.

8. Verfahren nach wenigstens einem der vorhergehenden Ansprüche, **dadurch gekennzeichnet, dass** die Fasergewebe oder Fasermatten (2, 4) Glasfasern und/oder Kohlenstofffasern und/oder Aramidfasern beinhalten.

9. Verfahren nach wenigstens einem der vorhergehenden Ansprüche, **dadurch gekennzeichnet, dass** das Filmscharnier (6) und die harzimprägnierten Fasergewebe oder Fasermatten (2, 4) derart ausgeführt sind, dass sie nach Durchführung des Pultrusionsverfahrens die gleiche Farbe aufweisen.

10. Baueinheit (1), beinhaltend wenigstens zwei aus faserverstärktem Kunststoff bestehende Profilformteile (2, 4), welche mittels wenigstens eines mindestens teilweise aus elastischem Kunststoff bestehenden Filmscharniers (6) miteinander gelenkig verbunden sind, hergestellt nach einem Verfahren nach wenigstens einem der vorhergehenden Ansprüche.

11. Baueinheit nach Anspruch 10, **dadurch gekennzeichnet, dass** sie als äußere Verkleidung oder als Innenverkleidung von Fahrzeugen, Flugzeugen oder Gebäuden verwendet wird.

## Claims

1. A method for manufacturing an assembly (1) containing at least two profiled moulded parts (2, 4) which are composed of fibre-reinforced plastic and which by means of at least one film hinge (6) which is at least partially composed of elastic plastic are interconnected in an articulated manner, wherein the at least two profiled moulded parts (2, 4) and their connection by means of the film hinge (6) are manufactured by the method in one work step, **characterized in that** the method is a pultrusion method, and **in that** at least two resin-impregnated fibrous fabrics or fibrous mats (2, 4), together and parallel with the prefabricated film hinge (6) which is disposed therebetween, are introduced into a pultrusion die (20) and guided therethrough.

2. A method for manufacturing an assembly (1) containing at least two profiled moulded parts (2, 4) which are composed of fibre-reinforced plastic and which by means of at least one film hinge (6) which is at least partially composed of elastic plastic are interconnected in an articulated manner, wherein the at least two profiled moulded parts (2, 4) and their connection by means of the film hinge (6) are manufactured by the method in one work step, **characterized in that** the method is a pultrusion method, and **in that** at least two resin-impregnated fibrous fabrics or fibrous mats (2, 4), while forming a gap (19) between them, are introduced in parallel into a pultrusion die (20) and a pasty thermoplastic is extruded within the pultrusion die (20) into the gap (19) and subsequently, together with said at least two resin-impregnated fibrous fabrics or fibrous mats (2, 4) and parallel with them, is guided through the pultrusion die (20), in order to configure post curing and cooling the two profiled moulded parts (2, 4) which are interconnected by a film hinge (6).

3. The method according to Claim 1 or 2, **characterized in that** the film hinge (6) or the pasty thermoplastic, on the one hand, and the resin-impregnated fibrous fabrics or fibrous mats (2, 4), on the other hand, are interconnected in a peripherally overlapping manner at least while being guided in parallel through the pultrusion die (20).

4. The method according to at least one of Claims 1 to 3, **characterized in that** the resin-impregnated fibrous fabrics or fibrous mats (2, 4), together with the film hinge (6) disposed therebetween, are moulded and cured under the influence of heat.

5. The method according to Claim 4, **characterized in that** in order to configure in each case a formfitting connection, when viewed in a direction which is transverse to the longitudinal extent of the film hinge (6), the peripheries (12) of the film hinge (6) at least in places have an undercut cross section which is encompassed by the periphery (14, 16) of the assigned profiled moulded part (2, 4).

6. The method according to at least one of the preceding claims, **characterized in that** the film hinge (6) at least partially is composed of a thermoplastic material and/or an elastomer.

7. The method according to at least one of the preceding claims, **characterized in that** fibre-reinforced plastic profiles are formed from the resin-impregnated fibrous fabrics or fibrous mats (2, 4) by way of the pultrusion method.

8. The method according to at least one of the preceding claims, **characterized in that** the fibrous fabrics or fibrous webs (2, 4) contain glass fibres and/or carbon fibres and/or aramid fibres.

9. The method according to at least one of the preceding claims, **characterized in that** the film hinge (6) and the resin-impregnated fibrous fabrics or fibrous mats (2, 4) are implemented in such a manner that they have the same colour when the pultrusion method has been carried out.

10. An assembly (1), containing at least two profiled moulded parts (2, 4) which are composed of fibre-reinforced plastic and which by means of at least one film hinge (6) which is at least partially composed of elastic plastic are interconnected in an articulated manner, manufactured according to a method according to at least one of the preceding claims.

11. The assembly according to Claim 10, **characterized in that** said assembly (1) is used as an external cladding or as an internal cladding of vehicles, aircraft, or buildings.

## Revendications

1. Procédé de fabrication d'une unité de construction (1) contenant au moins deux pièces de formage profilées (2, 4) constituées de plastique renforcé par des fibres, lesquelles sont reliées les unes aux autres de manière articulée au moyen d'au moins une charnière à film (6) constituée au moins en partie de plastique élastique, les au moins deux pièces de formage profilées (2, 4) ainsi que leur liaison au moyen de la charnière à film (6) étant réalisées en une seule passe de travail par le procédé, **caractérisé en ce que** le procédé est un procédé de pultrusion et **en ce qu'**au moins deux tissus fibreux ou deux mats fibreux (2, 4) imprégnés de résine sont introduits et guidés conjointement et parallèlement à la charnière à film (6) préfabriquée disposée entre eux dans un outil de pultrusion (20) et à travers celui-ci.

2. Procédé de fabrication d'une unité de construction (1) contenant au moins deux pièces de formage profilées (2, 4) constituées de plastique renforcé par des fibres, lesquelles sont reliées les unes aux autres de manière articulée au moyen d'au moins une charnière à film (6) constituée au moins en partie de plastique élastique, les au moins deux pièces de formage profilées (2, 4) ainsi que leur liaison au moyen de la charnière à film (6) étant réalisées en une seule passe de travail par le procédé, **caractérisé en ce que** le procédé est un procédé de pultrusion et **en ce qu'**au moins deux tissus fibreux ou deux mats fibreux (2, 4) imprégnés de résine sont introduits parallèlement dans un outil de pultrusion (20) en formant entre eux un espace (19) et un matériau thermoplastique pâteux est extrudé à l'intérieur de l'outil de pultrusion (20) dans l'espace (19) et ensuite conjointement et parallèlement à ceux-ci est guidé à travers l'outil de pultrusion (20) afin de constituer après le durcissement et le refroidissement les deux pièces de formage profilées (2, 4) reliées l'une à l'autre par une charnière à film (6).

3. Procédé selon la revendication 1 ou 2, **caractérisé en ce que** la charnière à film (6) ou le matériau thermoplastique pâteux d'une part et les tissus fibreux ou mats fibreux (2, 4) imprégnés de résine d'autre part, au moins pendant le passage parallèle à travers l'outil de pultrusion (20), sont reliés les uns aux autres du côté des bords avec chevauchement.

4. Procédé selon au moins l'une quelconque des revendications 1 à 3, **caractérisé en ce que** les tissus fibreux ou mats fibreux (2, 4) imprégnés de résine sont formés et durcis avec la charnière à film (6) disposée entre eux avec application de chaleur.

5. Procédé selon la revendication 4, **caractérisé en ce que** pour réaliser une liaison par engagement par correspondance de formes à chaque fois, vu dans une direction transversalement à l'étendue longitudinale de la charnière à film (6), les bords (12) de la charnière à film (6) présentent au moins en partie une section transversale en contre-dépouille qui est engagée sur son pourtour par le bord (14, 16) de la pièce de formage profilée associée (2, 4).

6. Procédé selon au moins l'une quelconque des revendications précédentes, **caractérisé en ce que** la charnière à film (6) se compose au moins en partie d'un matériau thermoplastique et/ou d'un élastomère.

7. Procédé selon au moins l'une quelconque des revendications précédentes, **caractérisé en ce que** des profilés en plastique renforcés par des fibres sont formés par le procédé de pultrusion, à partir des tissus fibreux ou des mats fibreux (2, 4) imprégnés de résine.

8. Procédé selon au moins l'une quelconque des revendications précédentes, **caractérisé en ce que** les tissus fibreux ou mats fibreux (2, 4) contiennent des fibres de verre et/ou des fibres de carbone et/ou des fibres d'aramide.

9. Procédé selon au moins l'une quelconque des revendications précédentes, **caractérisé en ce que** la charnière à film (6) et les tissus fibreux ou mats fibreux (2, 4) imprégnés de résine sont réalisés de telle sorte qu'ils présentent la même couleur après la mise en oeuvre du procédé de pultrusion.

10. Unité de construction (1) contenant au moins deux pièces de formage profilées (2, 4) constituées de plastique renforcé par des fibres, lesquelles sont reliées les unes aux autres de manière articulée au moyen d'au moins une charnière à film (6) constituée au moins en partie de plastique élastique, fabriquée selon un procédé selon au moins l'une quelconque des revendications précédentes.

11. Unité de construction selon la revendication 10, **caractérisée en ce qu'**elle est utilisée en tant qu'habillage extérieur ou en tant qu'habillage intérieur de véhicules, d'avions ou de bâtiments.
